# FASCICULE DE BREVET EUROPEEN

(11) **EP 1 075 619 B1**
(45) Date de publication et mention de la délivrance du brevet: **08.09.2004**
(21) Numéro de dépôt: 00906460.1
(22) Date de dépôt: 23.02.2000
(51) Int. Cl.: F16L 21/035, F16L 25/00

(54) **DISPOSITIF D'ETANCHEITE ET RACCORD EQUIPE D'UN TEL DISPOSITIF**
DICHTUNG UND ROHRVERBINDUNG MIT EINER SOLCHEN VORRICHTUNG
SEALING DEVICE AND FITTING EQUIPPED THEREWITH

(30) Priorité: 26.02.1999 FR 9902407
(43) Date de publication de la demande: 14.02.2001
(73) Titulaire: HUTCHINSON, 75008 Paris (FR)
(72) Inventeur: LEMOINE, Jean-Philippe, F-45200 Amilly (FR)
(74) Mandataire: Doireau, Marc
(86) Numéro de dépôt international: PCT/FR2000/000447
(87) Numéro de publication internationale: WO 2000/050798

(56) Documents cités:
- FR-A- 2 234 508
- NL-A- 8 101 127
- US-A- 2 396 491
- US-A- 3 979 130

## Description

L'invention concerne un dispositif d'étanchéité pour raccordement étanche entre un tube rigide et un élément de connexion femelle dans un circuit de transfert de fluide.

D'une manière classique, en particulier dans le cas où le tube rigide à raccorder présente une extrémité lisse, les dispositifs d'étanchéité couramment utilisés sont constitués par des joints toriques en un matériau élastomère qui sont montés dans des gorges prévues à la surface externe du tube. Dans ce cas, c'est la partie mâle du raccord qui porte le dispositif d'étanchéité.

Ce type de dispositif d'.étanchéité n'est pas sans présenter des inconvénients, parmi lesquels on peut notamment citer :
- la nécessité d'une grande précision dans la réalisation des gorges de réception des joints,
- une possible détérioration des joints lors de leur montage dans les gorges du fait de la petite taille et de la fragilité de ces joints, et
- l'apparition possible d'un défaut d'étanchéité, en particulier lorsque le tube est soumis à des vibrations, par suite d'une usure résultant des chocs répétés entre le tube rigide et l'élément de connexion femelle.

En outre, la réalisation des gorges de réception des joints peut nécessiter un travail de l'extrémité du tube par compactage pour obtenir une surépaisseur de matière suffisante pour pouvoir aménager les gorges. Enfin, lorsque plusieurs lignes d'étanchéité sont prévues, les gorges sont proches les unes des autres, ce qui exclut leur réalisation par roulage si bien qu'une réalisation par usinage s'avère plus appropriée.

A titre d'exemple, on connaît du document GB-1 494 669 un dispositif d'étanchéité où le tube rigide comprend une gorge dans laquelle on monte au moins un joint torique et une bague fendue en un matériau à faible coefficient de friction. Cette bague vient se monter à glissement dans l'élément de connexion femelle pour éviter un contact direct entre le tube et l'élément femelle. Une solution de ce type est, également décrite dans le document FR-2-740 526.

Le document US-A-2,396,491 décrit une bague d'étanchéité apte à être monté entre deux sections d'un tube pour assurer l'étanchéité. Cette bague est constituée par un insert qui présente des lignes d'étanchéité internes et externes sous la forme de bossages d'un même matériau que celui de l'insert pour réaliser une bague d'une seule pièce.

Le document US-A-5 653 475 décrit un dispositif d'étanchéité selon le préambule de la revendication 1.

Le but de l'invention est de perfectionner le dispositif d'étanchéité selon ce dernier document, et elle propose à cet effet un dispositif d'étanchéité pour raccordement étanche entre un tube rigide et un élément de connexion femelle dans un circuit de transfert de fluide, ce dispositif étant constitué par un insert tubulaire rigide ou semi-rigide comprenant au moins une ligne d'étanchéité, ledit insert étant destiné à être monté serré sur une extrémité du tube, caractérisé en ce que l'insert est métallique et recouvert, tant au niveau de sa paroi externe que de sa paroi interne, par un revêtement en élastomère qui porte au moins une ligne d'étanchéité externe et une ligne d'étanchéité interne.

Un dispositif de raccordement étanche selon l'invention permet de garantir une bonne compression des joints, et peut être fabriqué avec des tolérances de fabrication moins contraignantes que celles nécessitées dans les dispositifs antérieurs.

Le dispositif d'étanchéité selon l'invention trouve de nombreuses applications où il faut assurer des connexions étanches pour la transmission d'un fluide, en particulier dans le domaine automobile pour assurer des raccordements étanches dans des circuits de climatisation, des circuits d'huile (direction assistée, freins, refroidissement, ...), des circuits de refroidissement (eau, antigel, ...).

D'autres avantages, caractéristiques et détails de l'invention ressortiront du complément de description qui va suivre en référence aux dessins annexés, donnés uniquement à titre d'exemple et dans lesquels :
- les figures 1 à 3 sont des vues en coupe schématique d'un dispositif d'étanchéité selon l'état de la technique et qui sont constitué d'un insert rapporté sur l'extrémité d'un tube rigide, et
- la figure 4 est une vue en coupe pour illustrer un dispositif d'étanchéité selon l'invention.

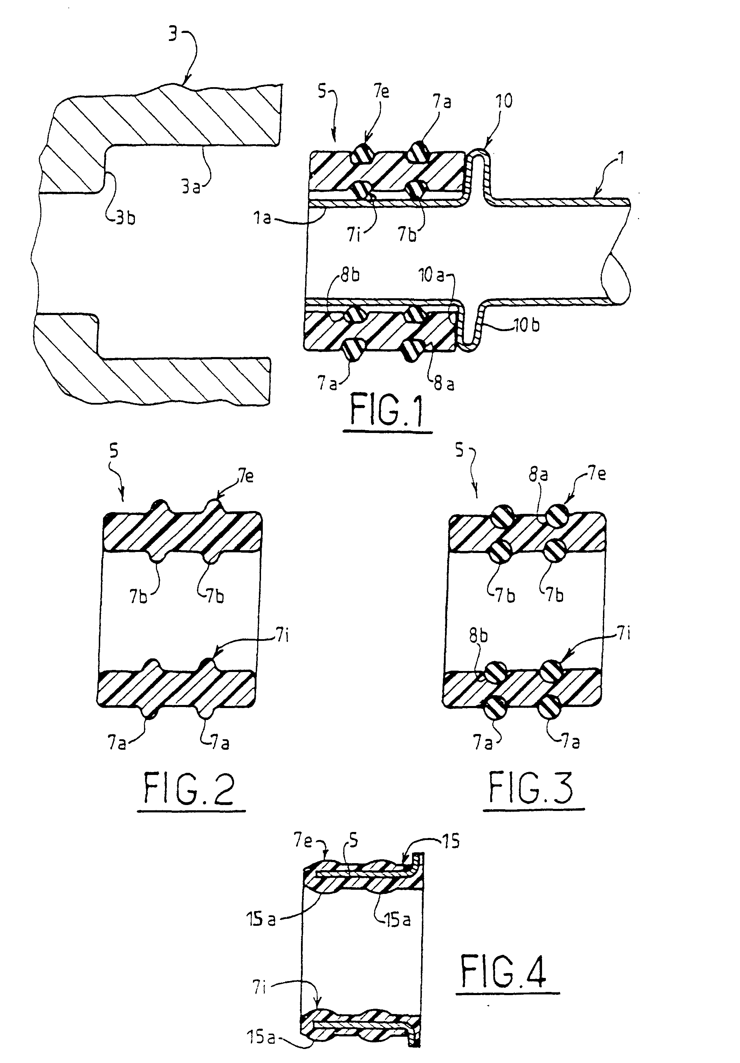

En référence à la figure 1 soit un tuyau ou tube rigide 1 à raccorder de façon étanche à un élément de connexion femelle 3, ce tube 1 et cet élément femelle 3 faisant partie d'un circuit de transfert de fluide quelconque.

Pour assurer un raccordement étanche entre le tube 1 et l'élément femelle 3, le dispositif d'étanchéité selon l'invention est constitué par un insert 5 rigide ou semi-rigide qui supporte au moins une ligne d'étanchéité.

Plus précisément, l'insert 5 supporte au moins une ligne d'étanchéité externe 7e et une ligne d'étanchéité interne 7i, qui assurent l'étanchéité entre l'insert 5 et le tube 1 d'une part et entre l'insert 5 et l'élément de connexion femelle 3 d'autre part

Dans l'exemple illustré à la figure 1, l'insert 5 est réalisé en une matière plastique par exemple et chaque ligne d'étanchéité 7e et 7i est constituée par un joint élastiquement déformable, en élastomère par exemple, qui est surmoulé sur l'insert 5. Deux joints annulaires 7a sont surmoulés sur la paroi externe de l'insert 5, et deux joints annulaires 7b sont également surmoulés sur la paroi interne de l'insert 5. Chaque joint 7a,7b est surmoulé dans une gorge correspondante 8a,8b de l'insert 5, ces gorges étant directement venues de moulage avec l'insert.

Le diamètre interne de l'insert 5 et le diamètre externe du tube 1 sont tels que l'on peut rapporter cet insert 5 sur l'extrémité libre la du tube 1 selon un ajustement serré par emmanchement qui entraîne une mise en compression des joints internes 7b de la ligne d'étanchéité interne 7i.

L'extrémité 1a du tube 1 sur laquelle a été rapporté l'insert 5 peut être ensuite engagée dans un alésage 3a de l'élément de connexion femelle 3. L'insert 5 peut se monter également suivant un ajustement serré non à l'intérieur de l'alésage 3a, ce qui entraîne également une mise en compression des joints externes 7a. Avantageusement, la face d'extrémité de l'insert 5 qui s'engage dans l'alésage 3a peut venir au contact d'un épaulement annulaire interne 3b ménagé dans le fond de l'alésage 3a et qui sert de butée.

Un dispositif d'accrochage (non représenté) assure enfin la connexion rigide entre le tube 1 et l'élément femelle 3. A cet effet, le tube 1 présente, d'une façon connue en soi, une butée 10 en saillie à sa paroi externe. Cette butée 10 présente deux faces annulaires transversales et opposées 10a et 10b. L'insert 5 vient au contact de la surface annulaire 10a de la butée 10 pour le positionner par rapport au tube 1, et la surface annulaire 10b de la butée 10 peut servir de surface d'accrochage pour un élément de fixation entre le tube 1 et l'élément femelle 3.

Selon une variante illustrée sur la figure 2, les joints d'étanchéité 7a et 7b sont directement venus de moulage avec l'insert 5.

Selon une variante illustrée sur la figure 3, les joints d'étanchéité 7a et 7b sont constitués par des joints annulaires qui sont rapportés dans des gorges 8a et 8b de l'insert 5.

Dans les exemple décrits précédemment, l'insert 5 a été considéré comme étant réalisé en une matière plastique, mais il pourrait également être réalisé en un matériau élastomère, voire même être métallique.

Selon l'invention illustrée sur la figure 4, l'insert 5 est métallique et recouvert, tant au niveau de sa paroi externe que de sa paroi interne, par un revêtement 15 en élastomère, du caoutchouc par exemple, qui va assurer l'étanchéité requise.

Plus précisément, le revêtement 15 en élastomère est rapporté par moulage de manière à former une ou plusieurs lignes d'étanchéité sur les surfaces externe et interne du revêtement 15.

Dans l'exemple illustré sur la figure 4, on a la présence de deux lignes d'étanchéité externe 7e et de deux lignes d'étanchéité interne 7i, qui se présente chacune sous la forme d'un bossage annulaire 15a. Dans le sens axial, les parois externe et interne du revêtement 15 présentent une forme ondulée.

D'une manière générale, l'invention ne se limite pas aux exemples de réalisation décrits précédemment. En particulier, le nombre de lignes d'étanchéité peut être quelconque, sachant qu'il faut prévoir au moins une ligne d'étanchéité externe 7e entre l'insert 5 et l'élément de connexion femelle 3.

## Revendications

1. Dispositif d'étanchéité pour raccordement étanche entre un tube rigide (1) et un élément de connexion femelle (3) dans un circuit de transfert de fluide, ce dispositif étant constitué par un insert tubulaire rigide ou semi-rigide (5) comprenant au moins une ligne d'étanchéité (7), l'insert (5) étant destiné à être monté serré sur une extrémité (la) du tube (1), l'insert (5) étant réalisé en un matériau plus rigide que le matériau constituant la ligne d'étanchéité (7), et ladite ligne d'étanchéité (7) étant surmoulée sur l'insert (5), **caractérisé en ce que** l'insert (5) est métallique et recouvert, tant au niveau de sa paroi externe que de sa paroi interne, par un revêtement (15) en élastomère qui porte au moins une ligne d'étanchéité externe (7e) et une ligne d'étanchéité interne (7i).

2. Dispositif d'étanchéité selon la revendication 1, **caractérisé en ce que** chaque ligne d'étanchéité (7e, 7i) se présente sous la forme d'un bossage annulaire (15a).

3. Système de raccordement étanche comprenant un tube rigide (1) formant pièce mâle et un élément de connexion femelle (3) pour un circuit de transfert de fluide, **caractérisé en ce qu'**il comprend un dispositif d'étanchéité tel que défini par la revendication 1 ou 2.

## Patentansprüche

1. Dichtungsvorrichtung für eine dichte Verbindung zwischen einem starren Rohr (1) und einem weiblichen Verbindungselement (3) in einem Übertragungskreis für Flüssigkeit, wobei diese Vorrichtung aus einem röhrenförmigen starren oder halbstarren Einsatzteil (5) gebildet wird, welches mindestens eine Dichtkante (7) aufweist, wobei das Einsatzteil (5) so ausgelegt ist, dass es zusammengedrückt auf einem Ende (1a) des Rohrs (1) aufbringbar ist, wobei das Einsatzteil (5) aus einem Werkstoff hergestellt ist, welcher starrer ist als der Werkstoff, der die Dichtkante (7) bildet, und wobei die Dichtkante (7) um das Einsatzteil (5) herum im Spritzguss ausgebildet ist, **dadurch gekennzeichnet, dass** das Einsatzteil (5) metallisch und sowohl auf der Höhe seiner Außenwand als auch seiner Innenwand mit einer Umhüllung (15) aus einem Elastomer überdeckt ausgebildet ist, welche mindestens eine äußere Dichtkante (7e) und eine innere Dichtkante (7i) aufweist.

2. Dichtungsvorrichtung nach Anspruch 1, **dadurch gekennzeichnet, dass** jede Dichtkante (7e, 7i) in der Form einer ringförmigen Vorsprungs bzw. eines Ringbuckels (15a) gestaltet ist.

3. Dichtes Verbindungssystem mit einem starren Rohr (1), welches ein männliches Teil bildet, und mit einem weiblichen Verbindungselement (3) für einen Übertragungskreis für Flüssigkeit, **dadurch gekennzeichnet, dass** es eine Dichtungsvorrichtung nach Anspruch 1 oder 2 aufweist.

## Claims

1. Sealing device for leaktight connection between a rigid tube (1) and a female connection element (3) in a fluid-transfer circuit, this device consisting of a rigid or semi-rigid tubular insert (5) comprising at least one sealing line (7), the insert (5) being intended to be mounted clamped on one end (1a) of the tube (1), the insert (5) being produced from a material which is more rigid than the material constituting the sealing line (7), and the said sealing line (7) being moulded onto the insert (5), **characterised in that** the insert (5) is metallic and covered, both at its external wall and at its internal wall, by an elastomer cladding (15) which carries at least one external sealing line (7e) and one internal sealing line (7i).

2. Sealing device according to Claim 1, **characterised in that** each sealing line (7e, 7i) is in the form of an annular protrusion (15a).

3. Leaktight connection system comprising a rigid tube (1) forming a male piece and a female connection element (3) for a fluid-transfer circuit, **characterised in that** it comprises a sealing device as defined by Claim 1 or 2.
